# EUROPEAN PATENT SPECIFICATION

(11) **EP 0 370 984 B1**
(45) Date of publication and mention of the grant of the patent: **30.03.1994**
(21) Application number: 89850402.2
(22) Date of filing: 16.11.1989
(51) Int. Cl.: A01C 7/00

(54) **Agricultural seed planter**
Landwirtschaftliche Säeinrichtung
Semoir agricole

(30) Priority: 22.11.1988 ZW 15588
(43) Date of publication of application: 30.05.1990
(73) Proprietor: Alexander, Frederick Murray, Rafflingora (ZW)
(72) Inventor: Alexander, Frederick Murray, Rafflingora (ZW)
(74) Representative: Siebmanns, Hubertus

(56) References cited:
- EP-A- 0 201 048
- AU-B- 10 149
- BE-A- 511 369
- FR-A- 1 356 084
- GB-A- 2 075 811
- US-A- 3 815 528
- US-A- 4 785 890
- US-A- 4 817 732

## Description

This invention is concerned with agricultural seed planters and more particularly with a planter developed for use with the so called "conservation tillage" technique of farming. Such a seed planter is more closely defined in the preamble of claim 1.

Planters have historically suffered from several problems. Certain seeds are difficult to germinate unless shallow planted which requires great accuracy of seed placement. A number of years ago, a so-called "hill-dropper" system was developed to address this problem, which instead of dispensing a continuous stream of seed, placed several seeds in clusters at intervals. It is accepted that groups of seedlings pushing together are more successful in penetrating a surface crust. Because the clusters of seed tended to become smeared at speed, and further because mechanical complexity reduced reliability and forced up cost of maintenance, many people abandoned this system.

In recent years, attempts have been made to eliminate tillage to combat the ever rising cost of mechanical operations. Planting into a mulch of previous crop residues has now become a practical proposition using recently developed selective herbicides to control the inevitable unwanted re-growth. This method is commonly referred to as "Zero Till" or "Conservation Tillage". When rainfall adds mud to trash however, the fixed tines or shoes on conventional planters clog up completely. Even disc coulters on seed drills stop turning in very soft conditions, the trash then accumulates rapidly as the mud scrapers cease to operate.

It will be readily apreciated that conventional planters are not well adapted to cope with the new technique of planting into crop residues and there have been attempts to address this problem in several ways. United States patent No. 4,817,732 of Douglas P. Brown and Donald R. Peck provides a spider wheel similar to that used in this invention, but which is specifically intended to address the requirement to incorporate small seed and/or chemicals into soil which has already been tilled.

More notably, in the United States patent No. 4,785,890̸ of Howard D. Martin, an attachment comprising spider wheels is proposed which clears trash aside to allow a conventional planter a reasonably clear path across the ground which will of course reduce the aforementioned tendency to clog.

FR-A-1 356 084 discloses a seed planter in accordance with the preamble of claim 1. This publication reveals powered circular saws flanking rotating hoes. The planes of all these tools are parallel to the direction of travel of an agricultural machine carrying such tools, the purpose of the latter being to cut the soil both vertically and, beneath the soil surface, even horizontally and throw up and loosen the soil which, subsequently, is made more compact again by means of a pressure wheel before seed is deposited, a second pressure wheel pressing down the dispensed seed and making the soil even more compact.

Other attempts include the heavy duty multi coulter type seed drill, and both the furrow openers and fluted coulter attachments fitted ahead of conventional planter units with the intention of moving trash aside, have enjoyed limited success. These machines have tended to be expensive and/or complex and have generally failed to work in either moist or hard conditions, or whenever considerable surface trash is also present.

It is the inventors view that all of these machines have been addressing only half of the problem and that what is required is a new purpose designed and built conservation planter which will not only cope with the problem addressed above, namely planting into trash, but will also provide a planter capable of effectively penetrating the hard untilled surface whilst at the same time, accurately placing seed beneath a layer of trash.

Furthermore, the inventor has simultaneously addressed the speed of operation on conservation tillage, including planting. Conventional seed planters tend to lose calibration and are prone to blocakages and breakages if planting speeds are increased. The planter of the invention has been purpose designed to operate efficiently at speeds significantly higher than those now generally accepted.

The invention makes use of one or more spider wheels or rotary tines the same as, or similar to, those employed by a well known rotary cultivator commonly known as a "Gang Tiller".

It has been found that the planter unit avoids blockages in extreme conditions because spider rotation is ensured by positive engagement of the rotary tines with the soil. This effects a self cleaning action between the tines and fixed sweepers mounted beside the spiders. A steady regulated stream of seed falling into depressions, which take the form of shallow diagonal slots formed by the spiders, produces a "hill drop" effect. Those seeds not falling to the bottom of the slots will lie at varying depths, ensuring that some seeds lie at optimum germination depth, whatever subsequent soil surface conditions result.

Therefor, according to the invention, a seed planter comprising in working combination, a frame including means to mount the frame to any conventional drawn tool bar; attached to said frame and suitably angled relative to the direction of travel, a shaft having mounted thereupon one or more soil cutting devices; and seed dispensing apparatus so positioned as to deposit seed generally behind the soil cutting devices and in association with suitable seed covering means, is characterized by features according to the characterizing clause of claim 1.

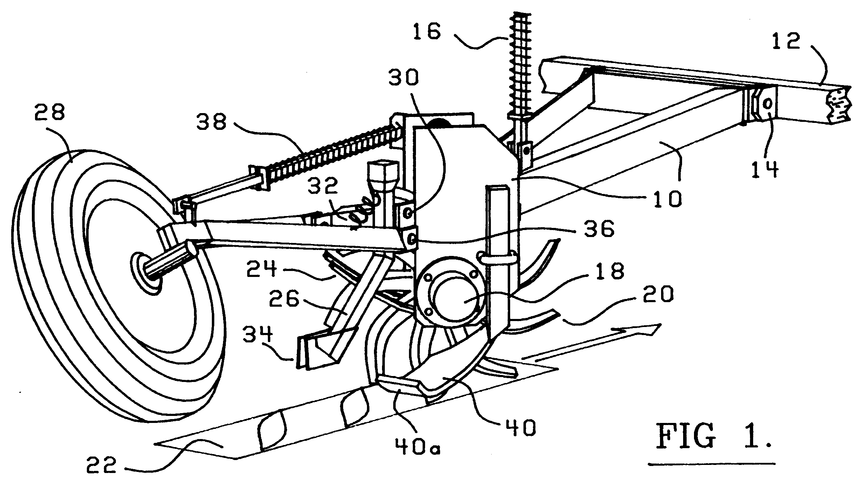

In order to facilitate the further understanding of the invention, one preferred example will now be described in detail with reference to the accompanying schematic drawings, in which:-
Fig. 1 is a side view from the right rear of a planter according to the invention;

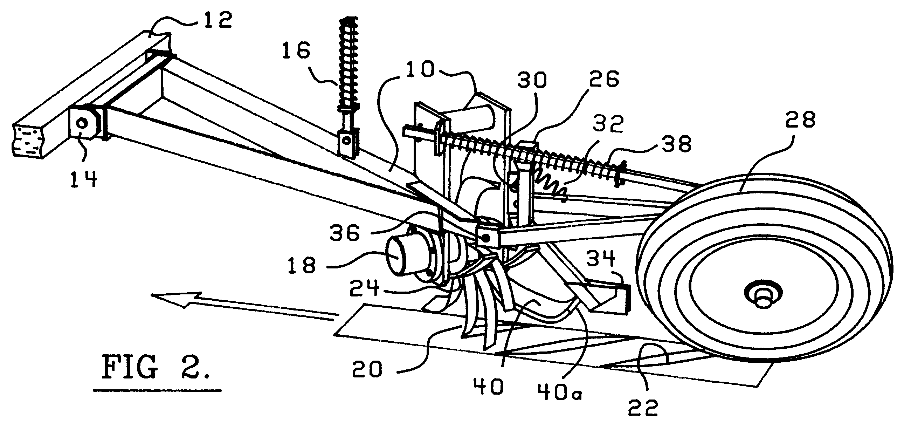

Fig. 2 is a view of the planter from the left rear; and

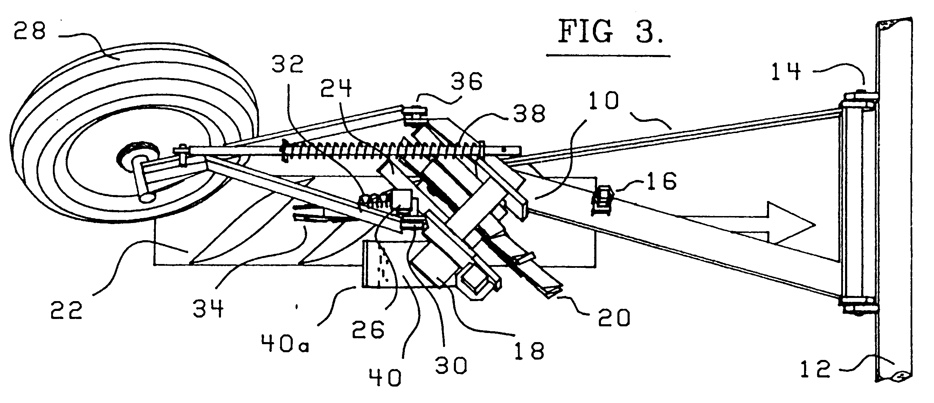

Fig. 3 is a view of the planter generally from above.

The ensuing description is in respect of one presently preferred embodyment of the invention. Like reference numerals will be used to refer to the same parts in each of the drawings.

Referring to the drawings generally, reference numeral 10̸ shows a frame which enables attachment of the implement to a conventional drawn tool bar 12, pivoted about transverse hinges 14. An adjustable spring 16 is provided which acts between the tool bar 12 and the frame 10̸ to provide down force for enhanced ground engagement. The spring 16 may optionally act in association with a lifting arm (not shown) when the planter is mounted to a trailed frame as opposed to a standard three point hitch.

The frame 10̸ carries a freely rotating shaft (not visible) which is journalled in bearings 18 and which furthermore carries, in this instance, one spider or rotary cultivator tine 20̸ which is ground engaging and, when in motion, creates a series of diagonal slots in the narrow area 22 into which seed is deposited. Positioned adjacent to the spider 20̸ are fixed sweepers 24 which clear any trash accumulation from the spider 20̸ as it rotates.

The trailing seed chute 26 may be fed via a flexible tube (not shown) from any conventional seed dispensing mechanisim (also not shown) which would be mounted generally above the unit, seed being thereby deposited in the area 22 between the spider 20̸ and a seed covering wheel 28. The seed chute 26 is free to pivot about axis 30̸, but is restricted downwardly by the sweeper 24. The spring 32 applies a light downward force to prevent the deformably flexible skirts 34 from bouncing whilst trailing along the surface of the cut soil. The flexible skirts 34 prevent adhesion of damp soil, while also enabling the seed chute 26 to ride over clumps of trash, yet remain in close proximity with the soil surface, thereby minimizing seed scattering upon impact.

The seed covering press wheel 28 is a simple but effective device being trailed from the frame 10̸ about a hinge at axis 36. The wheel 28 is leaning away and also set with toe out from the direction of travel of the planter, so that soil, which tends to be wind-rowed by the spider 20̸ to the side of the treated area 22, is thrown back onto the seed falling down between skirts 34. Downward force may be applied by adjustable spring 38 to suit prevailing conditions.

There is provided a surface contacting device 40̸ to act like a sled which is vertically adjustable and which regulates the depth of ground cut effected by the spider 20̸. This component is easily and inexpensively replaced when worn from extended surface contact. It has been found that this angled "ski shaped" device 40̸ is extremely effective in use, riding easily over all surfaces and ensuring adequate accuracy of planting depth, even at speeds well above those normally encountered in the planting of seed. An up-turned portion 40̸a minimizes the chance of damaging the planter should it accidentally be allowed to run back when still in contact with the ground.

It is believed that the effectiveness of the planter herein described, together with its relative simplicity of design, combine in a manner which constitutes a significant advance in the present state of the art.

## Claims

1. A seed planter comprising in working combination, a frame (10) adapted to be mounted to any conventional drawn tool bar (12), attached to said frame and angled relative to the direction of travel, a shaft having mounted thereupon one or more soil cutting devices (20), and seed dispensing apparatus (26) so positioned as to deposit seed generally behind the soil cutting devices and in association with suitable seed covering means (28), **characterized in that** the soil cutting device or devices (20) take the form of multi-tined spider wheels, the arrangement of which being such as to create, when in motion, a series of diagonal slots in a narrow ground area (22), into which slots seed is deposited, in that in association with each spider wheel, there are arranged one or more sweepers (24) attached to the frame and positioned to the side and parallel to the plane of rotation of the soil cutting devices (20), and in that a vertically adjustable surface contacting member (40) is attached to the frame (10) adjacent to the soil cutting devices adapted so as to regulate depth of soil cut.

2. A seed planter as claimed in Claim 1, wherein said sweepers (24) comprise rigid formations attached at their forward facing ends to the frame of the planter and which extend rearwards, on either side of and in close proximity to the multi-tined spider wheels (20) such that, when in motion, any accumulated debris is swept from the tines of the spider wheels.

3. A seed planter as claimed in Claim 1, wherein the vertically adjustable surface contacting member (40) comprises a "ski shaped" device adapted so as to ride over the soil surface in the manner of a sled.

4. A seed planter as claimed in Claim 1, when used in conjunction with any conventional seed metering and dispensing apparatus.

5. A seed planter as claimed in Claim 1, having optional adjustable biasing means (16) to provide down force as required to act between the frame and a tool bar (12) to which the planter is mounted, or between the frame (10) and the seed covering means (28), the latter, by preference, being a pneumatic press wheel, or between the frame (10) and the seed dispensing means (26) or combinations of all of the above.

6. A seed planter as claimed in Claim 1, in which the seed dispensing apparatus (26) includes a seed depositing chute, characterized by having deformably flexible skirts (34) located so as to be in soil contact and which tend to minimize adhesion of damp soil and also ensure accurate placement of seed.

7. A seed planter as claimed in claim 6, in which the seed chute (26) is free to pivot about an axis (30), but is restricted downwardly by the sweeper (24), and in which a spring (32) applies a light downward force to the seed chute to prevent the deformably flexible skirts (34) from bouncing whilst trailing along the surface of the cut soil.

## Patentansprüche

1. Landwirtschaftliche Säeinrichtung mit in Betriebskombination einem Rahmen (10) zum Anbringen an einem herkömmlichen gezogenen Gerätebalken (12), einer an genanntem Rahmen angebrachten und im Verhältnis zur Bewegungsrichtung im Winkel angeordneten Welle mit einem oder mehreren daran angebrachten Bodenaufreissorganen (20), einer Saatausgabevorrichtung (26), die derart angeordnet ist, dass sie Samen im wesentlichen hinter den Bodenaufreissorganen ablegt, sowie mit geeigneten Samenzudeckmitteln (28), **dadurch**
**gekennzeichnet, dass** das Bodenaufreissorgan oder die Bodenaufreissorgane (20) eine Form von vielendigen Zinkenrädern aufweisen, die derart angeordnet sind, dass sie in Bewegung eine Serie von diagonalen Rillen in einem schmalen Erdbereich (22) hervorrufen, in welche Rillen Samen abgelegt werden, dass jedem Zinkenrad ein Abkehrorgan oder mehrere Abkehrorgane (24) zugeordnet sind, welche am Rahmen befestigt und an der Seite sowie parallel zur Rotationsebene der Bodenaufreissorgane (20) angeordnet sind, und dass ein vertikal verstellbares Oberflächenkontaktorgan (40) am Rahmen (10) benachbart zu den Bodenaufreissorganen angebracht und zu Regulierung der Bodenaufreisstiefe vorgesehen ist.

2. Säeinrichtung nach Anspruch 1, bei welcher genannte Abkehrorgane (24) Versteifungen aufweisen, welche mit ihren nach vorne weisenden Enden am Rahmen der Säeinrichtung befestigt sind und sich auf einer Seite der vielzackigen Zinkenräder (20) und in nahem Anschluss an diese nach hinten erstrecken derart, dass im Betrieb etwa angesammeltes Fremdmaterial von den Zinken der Zinkenräder abgestreift wird.

3. Säeinrichtung nach Anspruch 1, wobei das vertikal einstellbare Oberflächenkontaktorgan (40) eine "skiartige" Vorrichtung umfasst, welche dazu vorgesehen ist, auf Art eines Schlittens über die Bodenoberfläche zu fahren.

4. Säeinrichtung nach Anspruch 1 bei Benutzung im Zusammenhang mit einer konventionellen Sädosierungs- und Verteilungsvorrichtung.

5. Säeinrichtung nach Anspruch 1, welche gegebenenfalls einstellbare Vorspannmittel (16) zum Erzeugen einer nach unten gerichteten Kraft aufweist, die zum Wirken zwischen dem Rahmen und dem Gerätebalken (12) erforderlich ist, an welchem die Säeinrichtung angebracht ist, oder zwischen dem Rahmen (10) und den Saatabdeckmitteln (28), wobei es sich bevorzugt um ein pneumatisches Druckrad handelt, oder zwischen dem Rahmen (10) und den Saatausgabemitteln (26) oder Kombinationen von all diesen oben genannten Teilen.

6. Säeinrichtung nach Anspruch 1, wobei die Saatausgabevorrichtung (26) eine Saatablagerutsche besitzt, welche gekennzeichnet ist durch deformierbar flexible Lappen (34), die derart angeordnet sind, dass sie Bodenkontakt haben und danach streben, ein Anhaften von feuchter Erde gering zu halten und auch eine genaue Ablage von Saat sicherzustellen.

7. Säeinrichtung nach Anspruch 6, bei welcher die Saatrutsche (26) um eine Achse (30) frei rotierbar angeordnet ist, jedoch nach unten hin begrenzt ist von dem Abkehrorgan (24), und wobei eine Feder (32) eine leichte nach unten gerichtete Kraft auf die Saatrutsche überträgt, um zu verhindern, dass die deformierbar flexiblen Lappen (34) stutzen, während sie über die Oberfläche der aufgerissenen Erde geschleppt werden.

## Revendications

1. Semoir comprenant en combinaison, un cadre (10) pour être monté à n'importe quelle barre d'attelage (12) conventionnelle pour outil trainé, un arbre fixé audit cadre et positionné sous un angle par rapport à la direction d'avancement et sur lequel un ou plusieurs dispositifs (20) de coupe du sol sont montés, et un appareil (26) de distribution de graines positionné de sorte que les graines sont déposées généralement derrière les dispositifs de coupe du sol en association avec un moyen (28) approprié de couverture des graines, caractérisé en ce que le ou les (20) dispositif(s) de coupe de sol ont la forme de roues en étoile à plusieurs pointes dont l'arrangement est tel à créer, en mouvement, une série de fentes diagonales dans une petite zone (22) du sol dans lesquelles les graines sont déposées, qu'un ou plusieurs racleurs (24), associés à chaque roue à étoile, sont fixés au cadre et placés à côté du et parallèlement au plan de rotation des dispositifs (20) de coupe du sol et qu'un élément (40) ajustable verticalement à surface de contact est fixé au cadre (10) adjacent aux éléments de coupe du sol et adapté de sorte à régler la profondeur du sol coupé.

2. Semoir selon la revendication 1, dans lequel les racleurs (24) sont formés par des formations rigides attachées à leur extrémité avant au cadre du semoir et qui s'étendent vers l'arrière des deux côtés très près des roues (20) en étoile à plusieurs pointes de sorte, qu'en mouvement, des débris quelconques accumulés sont raclés des pointes des roues en étoile.

3. Semoir selon la revendication 1, dans lequel l'élément (40) ajustable verticalement à surface de contact est un dispositif de forme de ski adapté de sorte à glisser sur la surface du sol à la manière d'un traineau.

4. Semoir selon la revendication 1, lorsqu'il est utilisé en combinaison avec un appareil conventionnel quelconque de dosage et de distribution de semence.

5. Semoir selon la revendication 1, ayant en option des moyens de précontrainte ajustables (16) pour fournir une force dirigée vers le bas telle qu'elle est requise pour agir entre le cadre et la barre (12) d'attelage auquel le semoir est monté, ou entre le cadre (10) et le moyen de couverture (28) des semences, le dernier étant de préférence une roue de pression à pneumatique, ou entre le cadre (10) et le moyen de distribution (26) de graines ou des combinaisons de tout ces agencements.

6. Semoir selon la revendication 1, dans lequel l'appareil de distribution de graines (26) comprend une glissière de distribution de graines, caractérisé en ce qu'il comporte des jupes (34) flexibles par déformation placées de sorte à être en contact avec le sol et qui ont tendance à réduire au minimum l'adhésion de terre humide et qui assurent également un placement correct des graines.

7. Semoir selon la revendication 6, dans lequel la glissière (26) de graines peut pivoter librement autour d'un axe (30), mais dont le mouvement vers le bas est limité par le racleur (24), et dans lequel un ressort (32) applique une force légère dirigée vers le bas sur la glissière de graines pour éviter que les jupes (34) flexibles par déformation rebondissent pendant qu'elles sont trainées le long de la surface du sol coupé.
